# FASCICULE DE BREVET EUROPEEN

(11) **EP 0 889 427 B1**
(45) Date de publication et mention de la délivrance du brevet: **09.10.2002**
(21) Numéro de dépôt: 98440144.8
(22) Date de dépôt: 02.07.1998
(51) Int. Cl.: G06F 17/60

(54) **Ensemble de gestion d'au moins un poste de travail**
Verwaltungssystem für mindestens einen Arbeitsplatz
Management system for at least one workplace

(30) Priorité: 04.07.1997 FR 9708695; 18.11.1997 FR 9714597
(43) Date de publication de la demande: 07.01.1999
(73) Titulaire: Sommax S.A., 67100 Strasbourg (FR)
(72) Inventeur: Metz, Olivier, 67870 Griesheim (FR)
(74) Mandataire: Nuss, Pierre

(56) Documents cités:
- EP-A- 0 442 374
- FR-A- 1 240 874
- US-A- 4 478 467
- US-A- 4 899 292
- US-A- 5 317 503
- US-A- 5 536 084

## Description

La présente invention concerne le domaine des équipements d'atelier, en particulier des ateliers de réparation et d'entretien, notamment de véhicules automobiles, et a pour objet un ensemble de gestion d'au moins un poste de travail.

Le travail en atelier de réparation et d'entretien, en particulier dans les ateliers de mécanique automobile, s'effectue généralement par postes munis chacun d'une desserte comportant l'outillage nécessaire à au moins un opérateur pour effectuer les interventions habituelles de réparation et/ou d'entretien.

Cependant, les opérations d'entretien et de réparation devenant de plus en plus complexes, d'une part du fait de la technicité de plus en plus développée des équipements des véhicules automobiles et, d'autre part, du fait que les ateliers de réparation et d'entretien sont davantage orientés vers le multimarques, c'est-à-dire vers une disponibilité et donc une expertise à l'égard d'un large éventail de modèles. Il en résulte la nécessité pour chaque opérateur de disposer d'une information la plus complète possible pour chaque modèle ou type de véhicule, ce qui n'est pratiquement pas envisageable.

Pour obvier à cet inconvénient, il a été proposé des dispositifs d'information pouvant être lus par les moyens informatiques courants, à savoir les postes de travail micro-informatiques. Ces dispositifs, qui peuvent être sous forme de disquettes informatiques, dont les données sont chargées dans la mémoire de l'ordinateur et peuvent être appelées en fonction des besoins, nécessitent cependant, pour leur mise en oeuvre, que l'opérateur se déplace généralement dans un local spécifique. En effet, un poste informatique n'est pratiquement jamais prévu dans un atelier de réparation et, en outre, la consultation des données par l'opérateur entrave le plus souvent le travail de l'utilisateur habituel du poste, à savoir un employé administratif.

De plus, à ce jour, les ordres de travail individuels et journaliers sont sous forme de fiches établies par le responsable d'atelier et remises à chaque opérateur en début de journée. Ces fiches spécifient les opérations à effectuer dans le cadre de chaque intervention et sont complétées par les opérateurs, qui inscrivent le temps passé ou le code d'intervention, dans le cas d'une intervention codifiée. Ce mode de gestion du travail permet une répartition optimale des tâches et une facturation aisée par simple transcription des données portées sur les fiches par les opérateurs.

Toutefois, dans le cas d'unités de réparation et d'entretien importantes, la préparation des fiches et leur transcription entraîne une charge de travail relativement importante. Cette charge est à lier, en outre, à la nécessité pour chaque opérateur de consulter les bases de données techniques avant les interventions et donc de se déplacer, à cet effet, dans un autre local. Il en résulte que les frais de gestion ont tendance à progresser malgré la modernisation des moyens mis en oeuvre.

Enfin, dans le cadre des réparations il est souvent recouru à des petites fournitures, c'est-à-dire à des petites pièces telles que des vis, des rondelles et autres, dont la prise en compte pour la facturation n'est pas possible du fait de la non transcription des références ne permettant pas leur prise en compte.

On connaît aussi par EP-A-0 442 374 une servante d'atelier munie de différents moyens de rangement tels que des tiroirs horizontaux et verticaux, ainsi que des placards de rangement pourvus de rayonnages et fermés par des portes elle-mêmes munies de dispositifs de rangement. Une telle servante d'atelier permet le rangement d'un nombre important d'outils différents mais n'est nullement adaptée à la gestion d'un stock de pièces de rechange.

Par ailleurs, US-A-4 899 292 et US-A-5 317 503 décrivent chacun un ordinateur pourvu d'un programme d'établissement de devis. Dans ces documents sont décrits des moyens de diagnostic relatifs à différentes parties d'un véhicule automobile et permettant la prise en compte des interventions à prévoir dans le cadre d'opérations de réparations.

Cependant, les moyens décrits dans ces documents ne permettent pas une prise en compte en temps réel d'un travail réel et des moyens, tels que des pièces de rechange, mis en oeuvre et devant être facturés.

La présente invention a pour but de pallier ces inconvénients en proposant un ensemble de gestion d'au moins un poste de travail permettant une répartition des tâches à tous les opérateurs et un enregistrement des travaux ou des codes de travaux déjà effectués, ainsi que des petites fournitures en fonction de leur code ou référence, de sorte que la facturation correspondante peut être réalisée par simple transcription des données enregistrées, voire être éditée automatiquement.

A cet effet, l'ensemble de gestion d'au moins un poste de travail est caractérisé en ce qu'il est essentiellement constitué par une servante d'atelier munie de l'outillage d'intervention logé dans des tiroirs frontaux et/ou latéraux et pourvue, en outre, de tableaux récapitulatifs des pièces détachées communes à un constructeur ou à un modèle avec représentation graphique de celles-ci, ces tableaux étant montés chacun dans la servante d'atelier, étant pourvus en regard de chaque représentation de pièce détachée d'un code à lecture optique définissant ladite pièce et correspondant chacun à un tiroir spécifique renfermant les petites pièces détachées et par un moyen informatique de lecture de données techniques et d'ordres de travail, ainsi que d'enregistrement des opérations effectuées et des fournitures utilisées.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en perspective d'un ensemble conforme à l'invention, et
la figure 2 est une vue en coupe d'une variante de réalisation de l'invention.

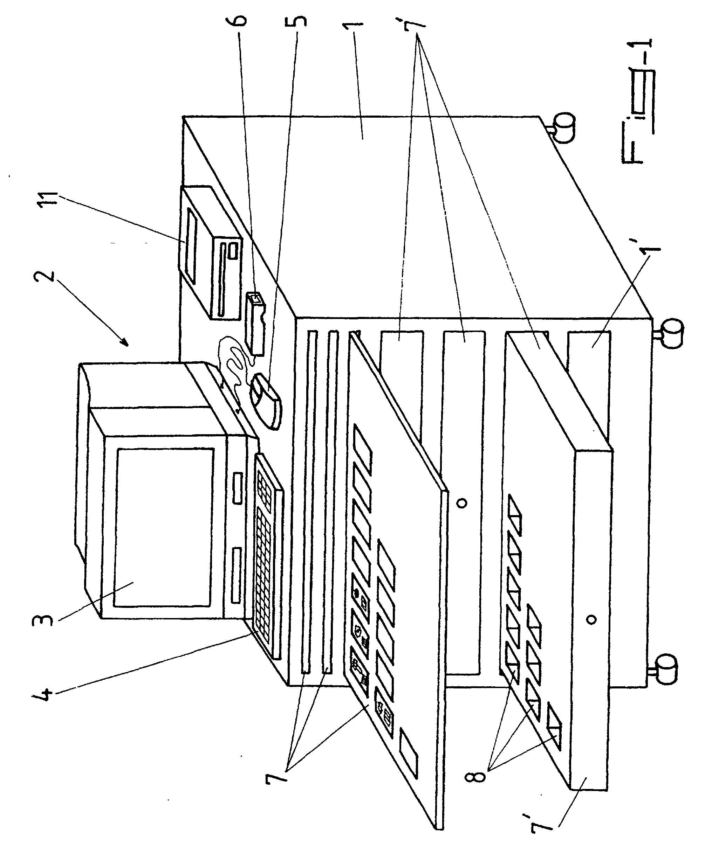

Conformément à l'invention, et comme le montre la figure 1 des dessins annexés, l'ensemble de gestion d'au moins un poste de travail est essentiellement constitué par une servante d'atelier 1 munie de l'outillage d'intervention et par un moyen informatique 2 de lecture de données techniques et d'ordres de travail, ainsi que d'enregistrement des opérations effectuées et des fournitures utilisées.

La servante d'atelier 1, qui est munie de l'outillage d'intervention logé dans des tiroirs frontaux et/ou latéraux 1', est pourvue, en outre, de tableaux récapitulatifs 7 des pièces détachées communes à un constructeur ou à un modèle avec représentation graphique de celles-ci, ces tableaux pouvant correspondre chacun à un tiroir spécifique 7' renfermant les petites pièces détachées.

Le moyen informatique 2 de lecture de données techniques et d'ordres de travail, ainsi que d'enregistrement des opérations effectuées et des fournitures utilisées est, de préférence, constitué par au moins un terminal informatique comportant un écran 3 d'affichage des ordres et des données, par un clavier de commande 4 équipé d'une souris 5 et par un moyen 6 de lecture de données codées imprimées. Un tel moyen informatique 2 peut avantageusement être relié à une unité centrale de gestion, dont la mémoire stocke l'ensemble des informations nécessaires aux opérateurs d'atelier, à savoir les ordres de travail individuels, les informations techniques relatives aux modèles concernés par les interventions à effectuer et éventuellement les références des pièces de remplacement à mettre en oeuvre.

Ainsi, la mémoire centrale, à laquelle est relié le moyen informatique 2, peut être chargée en continu avec les données techniques relatives aux véhicules ou autres à entretenir ou à réparer, qu'ils soient d'un même constructeur ou de constructeurs différents, les données relatives au travail à effectuer par le ou les opérateurs affectés à l'ensemble de gestion selon l'invention pouvant être introduites dans cette mémoire à chaque début de journée ou la veille au soir pour le lendemain. Il en résulte qu'un ou plusieurs opérateurs peuvent consulter sur l'écran 3, au moyen du clavier de commande 4 et éventuellement de la souris 5, d'une part, leur plan de travail journalier et, d'autre part, les données techniques relatives aux interventions qu'ils doivent effectuer. Par ailleurs, le clavier de commande 4 permettra la saisie, par chaque opérateur de chaque intervention et/ou du temps passé, la mise en oeuvre du moyen 6 de lecture optique de données codées imprimées permettant, en outre d'enregistrer immédiatement les données relatives à des pièces de remplacement. Il s'ensuit que l'ensemble des données nécessaires à l'établissement de la facture d'intervention peut être transmis à l'unité centrale.

De préférence, chaque tableau récapitulatif 7 est monté dans la servante 1 de manière coulissante et est pourvu, d'une part, près du bord opposé à celui d'extraction, de butées d'arrêt en position sortie et, d'autre part, en regard de chaque représentation de pièce détachée, d'un code à lecture optique définissant ladite pièce, et toutes les petites pièces détachées sont directement disposées dans une alvéole 8 correspondante du tiroir 7'. Ainsi, l'opérateur peut immédiatement se procurer les petites pièces qui lui sont nécessaires et en faire la saisie informatique, les plus grosses pièces pouvant être récupérées en magasin et saisies de manière analogue, par lecture du code correspondant sur la représentation du tableau 7. Bien entendu, dans le cas d'un atelier pratiquant la réparation et l'entretien multimarques, les grosses pièces détachées feront l'objet d'une commande et d'une fourniture spécifiques.

Dans un tel mode de réalisation, les tiroirs 7' sont disposés dans la partie supérieure de la servante d'atelier 1, sous les tableaux 7, suivant une superposition correspondant à celle des tableaux 7 et peuvent être pivotés, en position de consultation, le long de la façade correspondante de la servante d'atelier 1, au-dessus des tiroirs 7'. Ainsi, un opérateur pourra consulter le tableau 7 le concernant et extraire le tiroir 7' correspondant pour en retirer les petites fournitures lui étant nécessaires, le moyen 6 de lecture optique lui permettant d'enregistrer immédiatement le code desdites pièces, en vue de leur facturation. L'outillage d'atelier habituel, nécessaire à chaque opérateur, est disposé dans des tiroirs 1' s'étendant dans la partie inférieure de la servante d'atelier 1 ou encore dans une partie de cette servante opposée à celle renfermant les tableaux 7 et les tiroirs 7'.

Conformément à une variante de réalisation de l'invention, non représentée aux dessins annexés, chaque tiroir 7' peut être muni d'un couvercle spécifique monté à pivotement près de son bord arrière et comportant, sur sa face tournée vers le tiroir 7' en position de fermeture de ce dernier, les représentations des pièces détachées contenues dans les alvéoles desdits tiroirs et les codes à lecture optique définissant lesdites pièces. Ainsi, le retrait d'une pièce dans un tiroir 7' nécessitera automatiquement le soulèvement du couvercle correspondant, de sorte que la représentation des différentes pièces contenues dans les différents alvéoles seront apparentes, ainsi que leur code, qui pourra alors être lu par l'intermédiaire du moyen 6 de lecture optique.

Selon une autre variante de réalisation de l'invention, non représentée aux dessins annexés, la servante d'atelier 1 peut être munie, en outre, à proximité du moyen informatique 2, d'un ou de plusieurs supports avec des classeurs référençant des pièces détachées de différentes origines et applications, ces pièces étant représentées et munies de leur code de lecture optique. Un tel mode de réalisation permet, notamment, la réalisation d'un devis immédiat sur la base des pièces nécessaires, par exemple, à une réparation, ceci même pour des interventions sur des modèles d'origines différentes. En outre, ce mode de réalisation permet de disposer quasi-instantanément sur le lieu de travail d'un nombre considérable d'informations, qui nécessiteraient autrement d'importantes pertes de temps pour leur détermination.

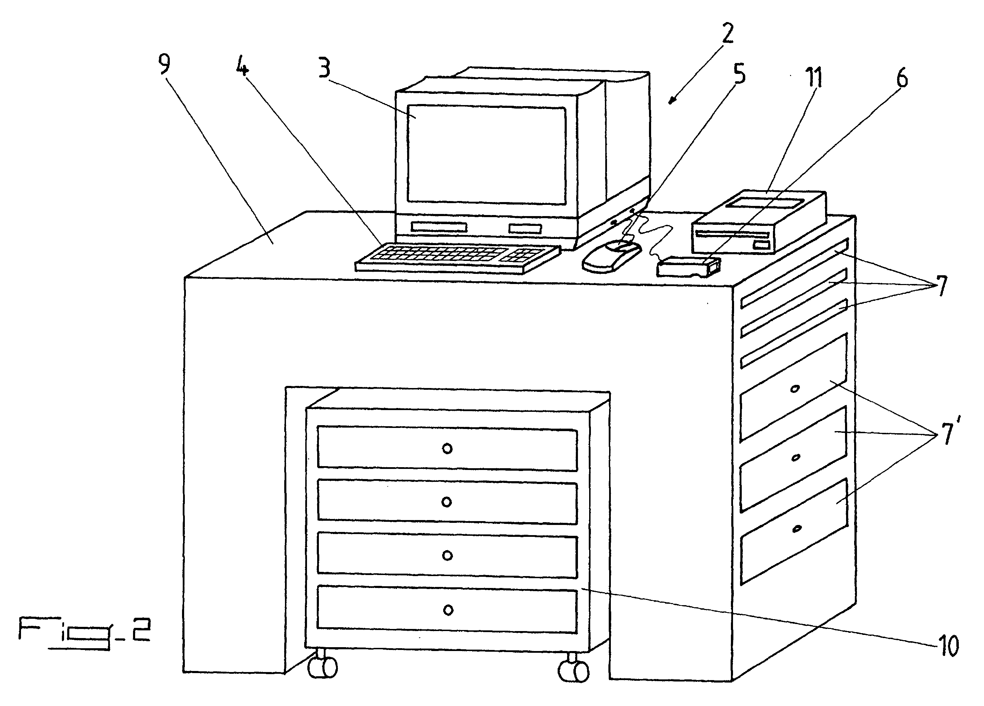

La figure 2 des dessins annexés représente une variante de réalisation de l'invention, dans laquelle la servante d'atelier est subdivisée en deux éléments distincts, à savoir, d'une part, un meuble fixe 9 servant de support au moyen informatique 2 et présentant dans ses flancs les tableaux 7 et les tiroirs 7' correspondants et, d'autre part, au moins une desserte mobile 10 destinée à recevoir l'outillage d'atelier habituel. Un tel mode de réalisation permet de maintenir la partie informatique pour l'information des opérateurs et le suivi des travaux, à poste fixe, tandis que la desserte mobile 10 pourra être amenée à proximité immédiate du lieu d'intervention.

Conformément à une autre caractéristique de l'invention, le moyen informatique 2 peut être complété par un dispositif 11 d'impression des informations permettant l'édition, soit de données techniques, soit d'un plan de travail journalier, soit encore d'un compte-rendu d'intervention avec saisie des fournitures utilisées. Les différentes informations ainsi éditées pourront être utilisées, d'une part, par l'opérateur directement sur son lieu d'intervention, en ce qui concerne les données techniques et le plan de travail, et, d'autre part, par un service de facturation, en ce qui concerne le compte rendu d'intervention et la saisie des fournitures utilisées. Bien entendu, dans un tel cas de figure, il sera nécessaire d'opérer une nouvelle saisie des informations en vue de la facturation.

Un mode de réalisation mettant en oeuvre un dispositif d'impression Il est notamment intéressant dans le cas où le moyen informatique 2 n'est pas ou ne peut pas être relié à une unité centrale de gestion. Il en résulte que certaines informations doivent faire l'objet de saisies ou de transferts journaliers, en particulier en ce qui concerne les informations relatives au plan de travail de chaque opérateur. Ces opérations peuvent être réalisées, de manière connue, par lecture d'un support informatique en début de journée de travail.

Le moyen informatique 2 de lecture de données techniques et d'ordres de travail, ainsi que d'enregistrement des opérations effectuées et des fournitures utilisées peut, en outre, être pourvu d'une interface d'adaptation pour la lecture des moyens électroniques embarqués sur certains véhicules et/ou dans d'autres dispositifs électroniques, permettant ainsi un transfert automatique des informations relatives au fonctionnement du matériel à entretenir et/ou à réparer. En effet, les dispositifs électroniques embarqués effectuent un relevé des données de fonctionnement du moyen qu'ils contrôlent, ainsi que des pannes éventuelles, de sorte qu'ils constituent une aide à la décision permettant un gain de temps important lors des interventions.

Selon une autre caractéristique de l'invention, le moyen informatique 2 de lecture de données techniques et d'ordres de travail, ainsi que d'enregistrement des opérations effectuées et des fournitures utilisées peut également être relié, par l'intermédiaire d'une interface d'adaptation, à des moyens électroniques d'exploitation de dispositifs annexes de contrôle et de réglage, ainsi qu'à des moyens d'information techniques prévus sur une unité centrale ou autre banque de données. Ainsi, il est possible de gérer, non seulement des interventions de réparation, mais également toute la maintenance d'un véhicule automobile, à savoir les vérifications techniques, notamment de fonctionnement non polluant du moteur, de conformité du train roulant, de l'éclairage, etc., les données relevées pouvant être mémorisées, puis restituées par le moyen informatique 2, par exemple sous forme de fiche de contrôle ou analogue.

Grâce à l'invention, il est possible de réaliser un ensemble de gestion d'au moins un poste de travail permettant à un opérateur de disposer à son poste de travail de toutes les informations qui lui sont nécessaires pour sa ou ses interventions journalières. Le moyen informatique 2 équipant cet ensemble permet, en effet, à l'opérateur de s'informer du travail à effectuer, le cas échéant de vérifier des données techniques spécifiques à une intervention et, enfin, d'enregistrer immédiatement les interventions effectuées ainsi que les pièces utilisées. Un tel mode de gestion du travail permet à l'opérateur un important gain de temps, tout en lui facilitant les travaux annexes, à savoir l'enregistrement des interventions en vue de leur facturation ultérieure.

En outre, en particulier dans le cas de la liaison du moyen informatique 2 en réseau avec une unité centrale, l'ensemble conforme à l'invention permet d'effectuer simultanément une gestion des stocks de pièces de rechange en temps réel, chaque opérateur réalisant la saisie des pièces qu'il utilise. Il s'ensuit que le service approvisionnement peut également suivre en continu l'évolution des stocks et procéder à un réapprovisionnement de manière optimale, c'est-à-dire en fonction des besoins réels, ce sans procéder à un inventaire à périodicité courte.

La présente invention a plus spécialement été décrite pour une application dans le domaine de l'entretien et de la réparation automobile, cependant, l'ensemble de gestion conforme à l'invention peut facilement trouver son application dans d'autres domaines de maintenance, en particulier d'après-vente, notamment de produits grand public, à savoir des produits audio, vidéo, etc...

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini par les revendications.

## Revendications

1. Ensemble de gestion d'au moins un poste de travail **caractérisé en ce qu'**il est essentiellement constitué par une servante d'atelier (1), munie de l'outillage d'intervention logé dans des tiroirs frontaux et/ou latéraux (1') et pourvue, en outre, de tableaux récapitulatifs (7) des pièces détachées communes à un constructeur ou à un modèle avec représentation graphique de celles-ci, ces tableaux étant montés chacun dans la servante d'atelier (1), étant pourvus en regard de chaque représentation de pièce détachée d'un code à lecture optique définissant ladite pièce et correspondant chacun à un tiroir spécifique (7') renfermant les petites pièces détachées et par un moyen informatique (2) de lecture de données techniques et d'ordres de travail, ainsi que d'enregistrement des opérations effectuées et des fournitures utilisées.

2. Ensemble, suivant la revendication 1, **caractérisé en ce que** le moyen informatique (2) de lecture de données techniques et d'ordres de travail, ainsi que d'enregistrement des opérations effectuées et des fournitures utilisées est constitué par au moins un terminal informatique comportant un écran (3) d'affichage des ordres et des données, par un clavier de commande (4) équipé d'une souris (5) et par un moyen (6) de lecture de données codées imprimées.

3. Ensemble, suivant la revendication 1, **caractérisé en ce qu'**il met en oeuvre au moins un ensemble de gestion suivant la revendication 2 relié à une unité centrale de gestion, dont la mémoire stocke l'ensemble des informations nécessaires aux opérateurs d'atelier, à savoir les ordres de travail individuels, les informations techniques relatives aux modèles concernés par les interventions à effectuer et éventuellement les références des pièces de remplacement à mettre en oeuvre.

4. Ensemble, suivant la revendication 1, **caractérisé en ce que** chaque tableau récapitulatif (7) est monté dans la servante d'atelier (1) de manière coulissante et est pourvu, près du bord opposé à celui d'extraction, de butées d'arrêt en position sortie et toutes les petites pièces détachées sont directement disposées dans une alvéole correspondante du tiroir (7').

5. Ensemble, suivant l'une quelconque des revendications 1 et 4, **caractérisé en ce que** les tiroirs (7') sont disposés dans la partie supérieure de la servante d'atelier (1), sous les tableaux (7), suivant une superposition correspondant à celle des tableaux (7) et peuvent être pivotés, en position de consultation, le long de la façade correspondante de la servante d'atelier (1), au-dessus des tiroirs (7').

6. Ensemble, suivant la revendication 1, **caractérisé en ce que** chaque tiroir (7') est muni d'un couvercle spécifique monté à pivotement près de son bord arrière et comportant, sur sa face tournée vers le tiroir (7') en position de fermeture de ce dernier, les représentations des pièces détachées contenues dans les alvéoles desdits tiroirs et les codes à lecture optique définissant lesdites pièces.

7. Ensemble, suivant l'une quelconque des revendications 1 à 3, **caractérisé en ce que** la servante d'atelier (1) est munie, en outre, à proximité du moyen informatique (2), d'un ou de plusieurs supports avec des classeurs référençant des pièces détachées de différentes origines et applications, ces pièces étant représentées et munies de leur code de lecture optique.

8. Ensemble, suivant la revendication I, **caractérisé en ce que** la servante d'atelier est subdivisée en deux éléments distincts, à savoir, d'une part, un meuble fixe (9) servant de support au moyen informatique (2) et présentant dans ses flancs les tableaux (7) et les tiroirs (7') correspondants et, d'autre part, au moins une desserte mobile (10) destinée à recevoir l'outillage d'atelier habituel.

9. Ensemble, suivant la revendication 2, **caractérisé en ce que** le moyen informatique (2) est complété par un dispositif (11) d'impression des informations permettant l'édition, soit de données techniques, soit d'un plan de travail journalier, soit encore d'un compte-rendu d'intervention avec saisie des fournitures utilisées.

10. Ensemble, suivant la revendication 2, **caractérisé en ce que** le moyen informatique (2) de lecture de données techniques et d'ordres de travail, ainsi que d'enregistrement des opérations effectuées et des fournitures utilisées est, en outre, pourvu d'une interface d'adaptation pour la lecture des moyens électroniques embarqués sur certains véhicules et/ou dans d'autres dispositifs électroniques, permettant ainsi un transfert automatique des informations relatives au fonctionnement du matériel à entretenir et/ou à réparer.

11. Ensemble, suivant la revendication 2, **caractérisé en ce que** le moyen informatique (2) de lecture de données techniques et d'ordres de travail, ainsi que d'enregistrement des opérations effectuées et des fournitures utilisées est relié, par l'intermédiaire d'une interface d'adaptation, à des moyens électroniques d'exploitation de dispositifs annexes de contrôle et de réglage, ainsi qu'à des moyens d'information techniques prévus sur une unité centrale ou autre banque de données.

## Patentansprüche

1. Verwaltungssystem für mindestens einen Arbeitsplatz,
**dadurch gekennzeichnet,**
**dass** es im wesentlichen aus einem Werkstattwagen (1) besteht, der mit dem Werkzeug für Eingriffe ausgerüstet ist, das in vorderen und/oder seitlichen Schubladen (1') ruht, und außerdem mit Übersichtstafeln (7) über die Ersatzteile eines Herstellers oder eines Modells mit deren graphischer Abbildung versehen ist, wobei diese Tafeln jeweils im Werkstattwagen (1) angebracht sind und neben jeder Abbildung eines Ersatzteiles mit einem Code zum optischen Einlesen versehen ist, der das genannte Teil definiert und jeweils einer bestimmten Schublade (7') entspricht, welche die Kleinersatzteile enthält, und aus einem Datenverarbeitungsmittel (2) zum Lesen von technischen Daten und Arbeitsanweisungen und zum Registrieren der ausgeführten Arbeiten und der verwendeten Bedarfsartikel.

2. System nach Anspruch 1,
**dadurch gekennzeichnet,**
**dass** das Datenverarbeitungsmittel (2) zum Lesen von technischen Daten und von Arbeitsanweisungen sowie zum Registrieren der ausgeführten Arbeiten und der verwendeten Bedarfsartikel aus mindestens einem Datenverarbeitungsterminal besteht, der einen Monitor (3) zur Anzeige der Anweisungen und Daten enthält, aus einer Betätigungstastatur (4), die mit einer Maus (5) ausgestattet ist, und aus einem Mittel (6) zum Einlesen gedruckter codierter Daten.

3. System nach Anspruch 1,
**dadurch gekennzeichnet,**
**dass** es mindestens ein Verwaltungssystem nach Anspruch 2 verwendet, das mit einer zentralen Verwaltungseinheit verbunden ist, deren Speicher die gesamten Informationen speichert, die für das Werkstattpersonal erforderlich sind, nämlich die einzelnen Arbeitsanweisungen, die technischen Informationen über die Modelle, die von den auszuführenden Eingriffen betroffen sind und gegebenenfalls die Nummern der zu verwendenden Ersatzteile.

4. System nach Anspruch 1,
**dadurch gekennzeichnet,**
**dass** jede Übersichtstafel (7) im Werkstattwagen (1) gleitend angebracht ist und nahe dem Rand, der dem gegenüberliegt, an dem sie herausgezogen wird, Anschläge in Auszugstellung vorgesehen sind und dass alle Kleinersatzteile direkt in einer entsprechenden Zelle der Schublade (7') angeordnet sind.

5. System nach einem der Ansprüche 1 und 4,
**dadurch gekennzeichnet,**
**dass** die Schubladen (7') im oberen Teil des Werkstattwagens (1) unter den Tafeln (7) angeordnet sind in einer der der Tafeln (7) entsprechenden Übereinanderanordnung und in der Benutzungsstellung oberhalb der Schubladen (7') an der entsprechenden Seite des Werkstattwagens (1) entlang geklappt werden können.

6. System nach Anspruch 1,
**dadurch gekennzeichnet,**
**dass** jede Schublade (7') mit einem eigenen Deckel versehen ist, der klappbar nahe ihrem hinteren Rand angebracht ist und auf seiner der Schublade (7') in der Schließstellung der letzteren zugewandten Seite die Abbildungen der Ersatzteile trägt, welche die Zellen der genannten Schubladen enthalten, und die optisch lesbaren Codes, welche die genannten Teile definieren.

7. System nach einem der Ansprüche 1 bis 3,
**dadurch gekennzeichnet,**
**dass** der Werkstattwagen (1) außerdem nahe dem Datenverarbeitungsmittel (2) mit einem oder mehreren Haltern mit Aktenordnern ausgestattet ist, die Ersatzteile verschiedenen Ursprungs und verschiedener Anwendung aufführen, wobei diese Teile abgebildet und mit ihrem optisch lesbaren Code versehen sind.

8. System nach Anspruch 1,
**dadurch gekennzeichnet,**
**dass** der Werkstattwagen in zwei verschiedene Teile unterteilt ist, nämlich einerseits ein festes Möbelstück (9), das als Träger des Datenverarbeitungsmittels (2) dient und in seinen Seiten die Tabellen (7) und die entsprechenden Schubladen (7') aufweist und andererseits mindestens einen beweglichen Wagen (10), der dazu bestimmt ist, das übliche Werkstattwerkzeug aufzunehmen.

9. System nach Anspruch 2,
**dadurch gekennzeichnet,**
**dass** das Datenverarbeitungsmittel (2) durch eine Vorrichtung (11) zum Ausdrucken der Informationen vervollständigt wird, welche die Ausgabe von technischen Daten, eines täglichen Arbeitsplanes oder eines Berichts über einen Eingriff mit Angabe der verwendeten Bedarfsartikel ermöglicht.

10. System nach Anspruch 2,
**dadurch gekennzeichnet,**
**dass** das Datenverarbeitungsmittel (2) zum Lesen von technischen Daten und Arbeitsanweisungen, sowie zur Registrierung der ausgeführten Arbeiten und der verwendeten Bedarfsartikel außerdem mit einer Anpassungsschnittstelle zum Lesen der elektronischen Mittel versehen ist, die sich an Bord bestimmter Fahrzeuge befinden, und/oder in anderen elektronischen Vorrichtungen, wodurch eine automatische Übertragung von Informationen über die Funktionstüchtigkeit der zu wartenden und/oder zu reparierenden Teile ermöglicht wird.

11. System nach Anspruch 2,
**dadurch gekennzeichnet,**
**dass** das Datenverarbeitungsmittel (2) zum Lesen von technischen Daten und Arbeitsanweisungen, sowie zur Registrierung der ausgeführten Arbeiten und der verwendeten Bedarfsartikel über eine Anpassungsschnittstelle mit elektronischen Mitteln zum Betreiben zusätzlicher Kontroll- und Regelvorrichtungen verbunden ist, sowie mit technischen Informationsmitteln, die in einer Zentraleinheit oder einer anderen Datenbank vorgesehen sind.

## Claims

1. Management system for at least one workstation, **characterised in that** it substantially consists of a workshop trolley (1) equipped with intervention tools accommodated in frontal and/or lateral drawers (1') and also provided with summary charts (7) for spare parts common to a manufacturer or a model with a diagram thereof, these charts each being fitted in the workshop trolley (1), being provided with an optically readable code for each spare part diagram, said code defining said part, and each corresponding to a specific drawer (7') containing the small spare parts and of a computer (2) for reading technical data and work orders and for recording operations carried out and supplies used.

2. System according to claim 1, **characterised in that** the computer (2) for reading technical data and work orders and for recording operations carried out and supplies used consists of at least one computer terminal comprising a screen (3) for displaying the orders and the data, a control keyboard (4) equipped with a mouse (5) and a means (6) for reading imprinted coded data.

3. System according to claim 1, **characterised in that** it employs at least one management system according to claim 2 connected to a central management unit of which the memory stores all the information required for workshop operators, namely individual work orders, technical information relating to the models to be subjected to interventions and optionally the reference numerals of the replacement parts to be employed.

4. System according to claim 1, **characterised in that** each summary chart (7) is fitted slidably in the workshop trolley (1) and is provided, close to the side remote from the extraction side, with stoppage abutments in the extraction position, and all the small spare parts are disposed directly in a corresponding compartment of the drawer (7').

5. System according to either of claims 1 and 4, **characterised in that** the. drawers (7') are disposed in the upper part of the workshop trolley (1) beneath the charts (7), with superimposition corresponding to that of the charts (7), and may be pivoted, in the consultation position, along the corresponding façade of the workshop trolley (1) above the drawers (7').

6. System according to claim 1, **characterised in that** each drawer (7') is equipped with a specific lid which is pivotally mounted close to its rear edge and comprises, on its face turned toward the drawer (7') in the closure position thereof, diagrams of the spare parts contained in the compartments of said drawers and the optically readable codes defining said parts.

7. System according to any one of claims 1 to 3, **characterised in that** the workshop trolley (1) is also equipped, in the vicinity of the computer (2), with one or more supports with card files bearing reference numerals for the spare parts from different origins and for different applications, these parts being illustrated and equipped with their optically readable code.

8. System according to claim 1, **characterised in that** the workshop trolley is sub-divided into two distinct elements, namely on the one hand a stationary item of furniture (9) serving to support the computer (2) and having the charts (7) and corresponding drawers (7') in its flanks and, on the other hand, at least one mobile cabinet (10) intended to receive the normal workshop tools.

9. System according to claim 2, **characterised in that** the computer (2) is completed by a device (11) for printing information to allow the outputting of technical data or of a daily work plan or else of an activity report with inputting of the supplies used.

10. System according to claim 2, **characterised in that** the computer (2) for reading technical data and work orders and for recording the operations carried out and the supplies used is also provided with an adaptation interface for reading electronic means carried on certain vehicles and/or in other electronic devices, thus allowing automatic transfer of information relating to the operation of the equipment to be maintained and/or repaired.

11. System according to claim 2, **characterised in that** the computer (2) for reading technical data and work orders and for recording operations carried out and supplies used is connected via an adaptation interface to electronic means for operating auxiliary checking and adjustment devices and to technical information means provided on a central processing unit or other database.
